# EUROPEAN PATENT APPLICATION

(11) **EP 4 840 711 A1**
(43) Date of publication of application: **18.11.2026**
(21) Application number: 25176579.8
(22) Date of filing: 15.05.2025
(51) Int. Cl.: B60W 10/04, B60T 8/175, B60W 10/16, B60W 10/184, B60W 30/18

(54) **A SET OF CRITERIA FOR LOCKING A DIFFERENTIAL**

(71) Applicant: Volvo Truck Corporation, 405 08 Göteborg (SE)
(72) Inventor: Wölfinger, Alexander, 442 65 Marstrand (SE); Rakholia, Meet Vitthalbhai, 431 34 Mölndal (SE); Groth, Björn, 417 29 Göteborg (SE); Strängberg, Martin, 417 66 Göteborg (SE)
(74) Representative: Valea AB

(57) **Abstract**

A computer system (800) comprising processing circuitry (802) configured to control a vehicle (2). The vehicle comprising a first wheel (6) and a second wheel (8), a differential (10), and a power unit (5) configured to supply input torque. The differential being configured to distribute the input torque to the first wheel and the second wheel; and to assume each one of an unlocked state and a locked state. The processing circuitry being configured to issue information to initiate a torque feeding procedure, in which the differential assumes the unlocked state and the power unit feeds input torque. During the torque feeding procedure, in response to receiving information indicative of the first wheel slipping more than the second wheel, the processing circuitry is configured to issue information to initiate a torque braking procedure, wherein a first wheel brake torque (T_{b1}) is applied to the first wheel. During the torque braking procedure, in response to determining a set of criteria is met, the processing circuitry is configured to issue control information to the differential to assume its locked state and to terminate the torque braking procedure. The set of criteria comprises a first rotational speed of the first wheel is equal to or above a second rotational speed of the second wheel when the first wheel brake torque has been applied for a predetermined time period.

## Description

### TECHNICAL FIELD

The disclosure relates generally to vehicle control. In particular aspects, the disclosure relates to a control of a differential of the vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A vehicle may be furnished with a differential. Purely by way of example, the differential may allow wheels of the vehicle to rotate at different speeds, for instance when the vehicle is cornering. It would be desired to control a vehicle with a differential in a driving condition in which the wheels experience different levels of slip.

### SUMMARY

According to a first aspect of the disclosure, there is provided a computer system comprising processing circuitry configured to control a vehicle. The vehicle comprising: a first wheel and a second wheel, and a differential, each one of the first wheel and the second wheel being connected to the differential. The vehicle further comprising a power unit configured to supply input torque to the differential, the differential being configured to distribute the input torque via at least one of a first torque portion to the first wheel and a second torque portion to the second wheel. The differential being configured to assume each one of an unlocked state and a locked state. The processing circuitry being configured to: issue information to the vehicle to initiate a torque feeding procedure, preferably from standstill, in which the differential assumes the unlocked state and the power unit feeds input torque to the differential in accordance with a torque profile; during the torque feeding procedure. The processing circuitry being further configured to, in response to receiving information indicative of that the first wheel is slipping more than the second wheel; issue information to the vehicle to initiate a torque braking procedure wherein a first wheel brake torque counteracting the first torque portion is applied to the first wheel as the power unit feeds input torque to the differential in accordance with the torque profile. The processing circuitry being further configured to, during the torque braking procedure, in response to determining that each criterion in a set of criteria, comprising at least one criterion, is met; issue control information to the differential to assume its locked state and to the vehicle to terminate the torque braking procedure. The set of criteria comprises: a brake time criterion being that a first rotational speed of the first wheel is equal to or above a second rotational speed of the second wheel when the first wheel brake torque has been applied to the first wheel for a predetermined time period.

Whilst the torque feeding procedure is preferably initiated from standstill, the torque feeding procedure may correspond to any torque feeding procedure. Furthermore, the torque feeding procedure may comprise or correspond to an acceleration event, or a hill-climbing event.

The differential may comprise, for example, a differential between two side wheels, such that the first wheel may comprise a left wheel and the second wheel may comprise a right wheel, or vice-versa. Any number of wheels may be connected via the differential, for example the first torque portion may transfer torque between a first pair of wheels, comprising the first wheel, and the differential, and the second torque portion may transfer torque between the second pair of wheels, comprising the second wheel, and the differential. Purely by way of example, the term "unlocked state" may encompass that the differential assumes a state in which a ratio between the first torque portion and the second torque portion is within the range of 99% - 101%. In a similar vein, though again purely by way of example, the term "locked state" may encompass that the differential assumes a state in which a ratio between the first rotational speed of the first wheel and the second rotational speed of the second wheel is within the range 99% - 101%. The torque braking procedure may comprise a closed-loop control, or an open-loop control of the first wheel brake torque.

The first aspect of the disclosure may seek to improve handling of the vehicle, in particular when the first wheel is slipping more than the second wheel. A technical benefit may include reduced wear on components of the vehicle, such as brakes and/or the wheels as such, e.g. tires of the wheels. This is since the processing circuitry may switch from issuing information to perform a torque braking procedure to issuing information wherein the differential is in a locked state. Thus, the first aspect of the disclosure implies that excessive wheel braking may be reduced or even avoided. In a similar vein, the first aspect of the disclosure implies that excessive wear of the differential may be reduced or even avoided.

Purely by way of example, the information indicative of that the first wheel is slipping more than the second wheel may comprise that the first rotational speed of the first wheel above the second rotational speed of the second wheel.

Optionally in some examples, including in at least one preferred example, the set of criteria comprises: a brake reduction response criterion being that a reduction in the first wheel brake torque during a portion of the predetermined time period, as compared to a first wheel brake torque being applied previously during the torque braking procedure, results in an increase of the first rotational speed. A technical benefit may include that the issuance of control information to the differential to assume its locked state and to the vehicle to terminate the torque braking procedure may be based on inter alia an observation that the first wheel brake torque is needed in order to avoid slipping of the first wheel.

Optionally in some examples, including in at least one preferred example, the reduction in the first wheel brake torque comprises that the first wheel brake torque is reduced a predetermined torque amount, as compared to a first wheel brake torque being applied previously during the torque braking procedure, wherein preferably the reduction in the first wheel brake torque is performed periodically during the predetermined time period. The first wheel brake torque being reduced by the predetermined torque amount may be performed when the torque braking procedure comprises an open-loop control of the wheel brake torque. A technical benefit may include a continued need for intervention of the wheel speeds may be tested.

Optionally in some examples, including in at least one preferred example, the first wheel brake torque is reduced by the predetermined torque amount periodically during the predetermined time period. A technical benefit may include continued need for intervention of the wheel speeds may be tested. Furthermore, by periodically reducing the first wheel brake torque the first wheel brake torque may in some cases be reduced towards zero, such that intervention of the wheel speeds may be discontinued.

Optionally in some examples, including in at least one preferred example, the set of criteria comprises: a same rotational speed criterion being that a difference between the first rotational speed and the second rotational speed is within a predetermined speed difference range. A technical benefit may include that locking of the differential may be carried out in a straightforward manner.

Optionally in some examples, including in at least one preferred example, during the torque braking procedure, the first wheel brake torque is controlled with the aim of keeping the difference between the first rotational speed and the second rotational speed within a predetermined speed difference range. A technical benefit may include that the outcome of the torque braking procedure may enable locking of the differential.

Optionally in some examples, including in at least one preferred example, the first wheel brake torque is controlled based on at least one of: an initial input torque at which the first wheel is slipping more than the second wheel, the torque profile of the torque feeding procedure, the first rotational speed and/or the second rotational speed, an estimate of an upcoming road surface. A technical benefit may include means for controlling the first wheel brake torque may be achieved. By controlling the first wheel brake torque based on an initial input torque at which the first wheel is slipping more than the second wheel maximum torque to be applied to the first wheel may be set, the maximum torque corresponding to a maximum allowable torque before the first wheel begins slipping. By controlling the first wheel brake torque based on the torque profile of the torque feeding procedure a braking torque can be controlled to maintain a torque applied to the first wheel. By controlling the first wheel brake torque based on the first rotational speed and/or the second rotational speed the first wheel torque can be controlled towards a desired first rotational speed. By controlling the first wheel brake torque based on an estimate of an upcoming road surface the wheel brake torque may be controlled in anticipation of a future need for the torque brake.

Optionally in some examples, including in at least one preferred example, the predetermined time period of the brake time criterion is in the range of 5-15 seconds.

Optionally in some examples, including in at least one preferred example, the set of criteria comprises: a braking torque criterion being that the first wheel brake torque is greater than a threshold first wheel brake torque. A technical benefit may include excessively high braking torques may be avoided, such that excessive heat and/or wear of the wheel brake may be avoided.

According to a second aspect of the disclosure, there is provided a vehicle comprising, or controlled by, the computer system. Technical benefits of the second aspect of the disclosure are largely analogous to the technical benefit of the first aspect of the disclosure. It shall also be noted that all examples of the second aspect of the disclosure are applicable to and/or combinable with all embodiments of the first aspect of the disclosure, and vice versa.

According to a third aspect of the disclosure, A computer-implemented method for controlling propulsion of a vehicle, the vehicle comprising: a first wheel and a second wheel, a differential, each one of the first wheel and the second wheel being connected to the differential. The vehicle further comprising a power unit configured to supply input torque to the differential, the differential being configured to distribute the input torque via at least one of a first torque portion to the first wheel and a second torque portion to the second wheel. The differential being configured to assume each one of an unlocked state and a locked state. The method comprising: by processing circuitry of a computer system, issuing information to the vehicle to initiate a torque feeding procedure, preferably from standstill, in which the differential assumes the unlocked state and the power unit feeds input torque to the differential in accordance with a torque profile. The method further comprising, by the processing circuitry, during the torque feeding procedure, in response to receiving information indicative of that the first wheel is slipping more than the second wheel. The method further comprising, issuing information to the vehicle to initiate a torque braking procedure wherein a first wheel brake torque counteracting the first torque portion is applied to the first wheel as the power unit feeds input torque to the differential in accordance with the torque profile. The method further comprising, by the processing circuitry, during the torque braking procedure, in response to determining that each criterion in a set of criteria, comprising at least one criterion, is met; issuing control information to the differential to assume its locked state and to the vehicle to terminate the torque braking procedure. The set of criteria comprises: a brake time criterion being that the first rotational speed is equal to or above the second rotational speed when the first wheel brake torque has been applied to the first wheel for a predetermined time period.

Technical benefits of the third aspect of the disclosure are largely analogous to the technical benefit of the first aspect of the disclosure. It shall also be noted that all examples of the third aspect of the disclosure are applicable to and/or combinable with all embodiments of the first aspect of the disclosure, and vice versa.

Optionally in some examples, including in at least one preferred example, the set of criteria comprises: a brake reduction response criterion being that a reduction in the first wheel brake torque during a portion of the predetermined time period, as compared to a first wheel brake torque being applied previously during the torque braking procedure, results in an increase of the first rotational speed.

Optionally in some examples, including in at least one preferred example, the reduction in the first wheel brake torque comprises that the first wheel brake torque is reduced a predetermined torque amount, as compared to a first wheel brake torque being applied previously during the torque braking procedure, , wherein preferably the reduction in the first wheel brake torque is performed periodically during the predetermined time period.

Optionally in some examples, including in at least one preferred example the first wheel brake torque is reduced by the predetermined torque amount periodically during the predetermined time period.

Optionally in some examples, including in at least one preferred example, the set of criteria comprises: a same rotational speed criterion being that a difference between the first rotational speed and the second rotational speed is within a predetermined speed difference range.

Optionally in some examples, including in at least one preferred example, during the torque braking procedure the first wheel brake torque is controlled with the aim of keeping the difference between the first rotational speed and the second rotational speed within a predetermined speed difference range.

Optionally in some examples, including in at least one preferred example, the first wheel brake torque is controlled based on at least one of: an initial input torque at which the first wheel is slipping more than the second wheel, the torque profile of the torque feeding procedure, the first rotational speed and/or the second rotational speed, an estimate of an upcoming road surface.

Optionally in some examples, including in at least one preferred example, the predetermined time period of the brake time criterion is in the range of 5-15 seconds.

Optionally in some examples, including in at least one preferred example, the set of criteria comprises: a braking torque criterion being that the first wheel brake torque is greater than a threshold first wheel brake torque.

According to a fourth aspect of the disclosure, a computer program product comprising program code for performing, when executed by the processing circuitry, the method. Technical benefits of the fourth aspect of the disclosure are largely analogous to the technical benefit of the first aspect of the disclosure. It shall also be noted that all examples of the fourth aspect of the disclosure are applicable to and/or combinable with all embodiments of the first aspect of the disclosure, and vice versa.

According to a fifth aspect of the disclosure, A non-transitory computer-readable storage medium comprising instructions, which when executed by the processing circuitry, cause the processing circuitry to perform the method. Technical benefits of the fifth aspect of the disclosure are largely analogous to the technical benefit of the first aspect of the disclosure. It shall also be noted that all examples of the fifth aspect of the disclosure are applicable to and/or combinable with all embodiments of the first aspect of the disclosure, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a driveline of the vehicle according to the example of **FIG. 1****,** when operating in split friction conditions.
**FIG. 3** is further view of the vehicle according to the example of **FIG. 1****,** when operating in split friction conditions.
**FIG. 4** is a flow chart of an exemplary method according to an example.
**FIG. 5** is a schematic diagram of an exemplary computer system for implementing examples disclosed herein, according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

When an input torque is applied to a wheel a loss of traction, i.e. wheelspin. may occur, such as when insufficient friction acts between the wheel and a road surface. When an input torque is applied to a set of wheels, connected via a differential, and when the differential is unlocked, a loss of traction of one of the wheels may occur so one of the wheels spins faster than the other. Loss of traction of one of the wheels may, for example, be caused by split friction conditions, whereby a portion of a road surface in contact with one of the wheels has a friction coefficient less than a portion of the road surface in contact with another of the wheels. When a vehicle is attempting to take off from a standstill position this may mean the vehicle is unable to move. Alternatively, when a vehicle is in motion such loss of traction may lead to loss of control of the vehicle, or when travelling up an inclined surface a vehicle may roll back.

When differentials are discussed in examples herein, the differentials may further relate to or refer to any suitable power or torque divider of a vehicle.

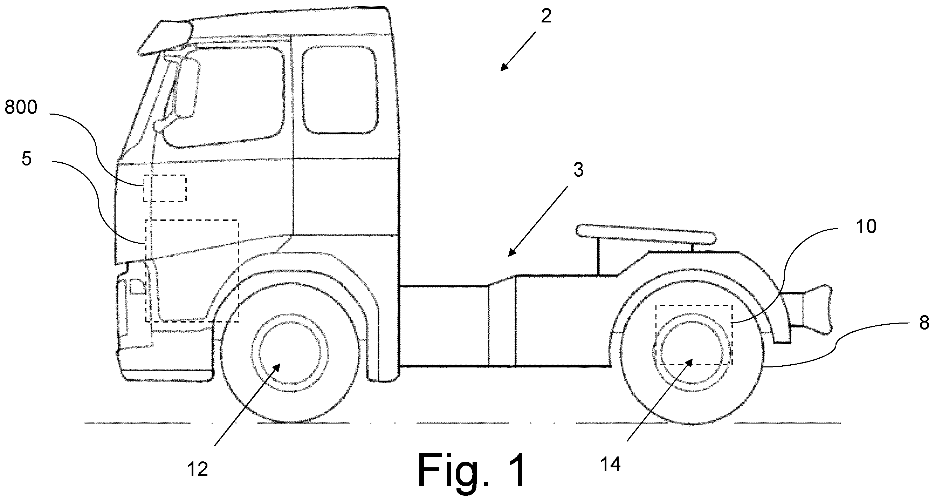

**FIG. 1** is an exemplary vehicle 2 according to an example, in the form of a truck 2. Whilst the shown aspect comprises a truck 2, the vehicle 2 may comprise any type of vehicle such as a car, bus, industrial vehicle, etc. In the shown example the vehicle 2 comprises a power unit 5. In at least some examples the power unit 5 may comprise an internal combustion engine, electric motor, a hybrid powertrain, or any known type of power unit which may be used to propel the vehicle 2.

In the shown example the vehicle 2 comprises a first axle 12 and a second axle 14. In the shown example the second axle 14 comprises a drive axle. The vehicle 2 may comprise any number of axles, wherein any number of the axles may comprise drive axles.

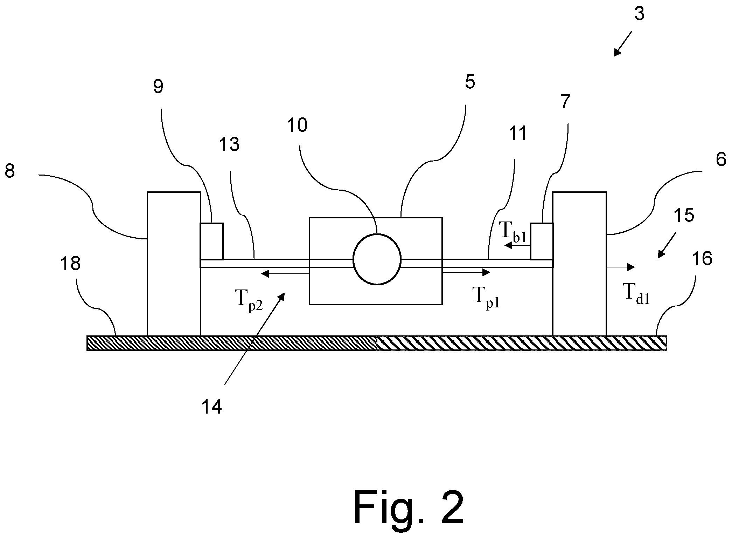

The vehicle 2 further comprises a first wheel 6 (see **FIG. 2**) and a second wheel 8. The first wheel 6 and the second wheel are arranged on the second axle 14. The vehicle 2 further comprises a differential 10. Each one of the first wheel 6 and the second wheel 8 are connected to the differential 10. The power unit 5 is configured to supply input torque to the differential 10, the differential 10 being configured to distribute the input torque via at least one of a first torque portion Tₚ₁ to the first wheel 6 and a second torque portion Tₚ₂ to the second wheel 8. In at least some examples, any number of wheels may be connected via the differential 10, for example the first torque portion Tₚ₁ may transfer torque between a first pair of wheels, comprising the first wheel 6, and the differential 10, and the second torque portion Tₚ₂ may transfer torque between the second pair of wheels, comprising the second wheel 8, and the differential 10. In at least some examples the vehicle 2 may comprise any number of differentials, any number of which may be configured to distribute input torque to at least two drive wheels on a drive axle in accordance with the current disclosure.

The differential 10 is configured to assume each one of an unlocked state and a locked state. Purely by way of example, the term "unlocked state" may encompass that the differential 10 assumes a state in which a ratio between the first torque portion Tₚ₁ and the second torque portion Tₚ₂ is within the range of 99% - 101%. In a similar vein, though again purely by way of example, the term "locked state" may encompass that the differential 10 assumes a state in which a ratio between a first rotational speed of the first wheel 6 and a second rotational speed of the second wheel 8 is within the range 99% - 101%.

The power unit 5, first wheel 6, second wheel 8, differential 10, second axle 14, etc. and interconnecting, and interrelated, components thereof may be regarded as forming a driveline 3 of the vehicle 2.

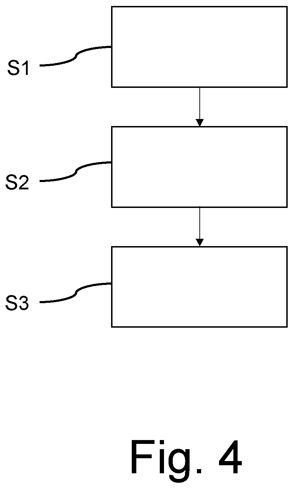

The vehicle 2 may comprise one or more sensors. The one or more sensors may be of any suitable type for measuring any suitable parameter. In particular, the one or more sensors may comprise one or more sensors for measuring the motion or status of the wheels and/or the vehicle 2. The one or more sensors may further comprise any sensors suitable for measuring or detecting operating conditions or information of the power unit 5. The one or more sensors may further comprise any other sensors which may measure or detect information of the surroundings of the vehicle 2. Examples of sensors are provided later with reference to **FIG. 4****.**

The vehicle 2 may comprise a Controller Area Network (CAN) (not shown). The CAN may be able to transmit any suitable signals or information of the vehicle status, sensor data, actuation data of actuators, or any suitable signals.

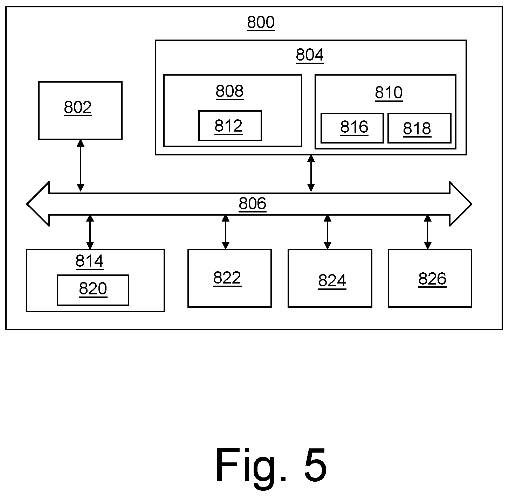

Examples herein may be performed by the computer system 800 and/or a processing circuitry 802 therein (described with reference to **FIG. 5**). The computer system 800 and/or the processing circuitry 802 therein may be or may comprise an Electronic Control Unit (ECU) of the vehicle. The computer system 800 and/or the processing circuitry 802 therein may be comprised in the vehicle 2, or may be remote to the vehicle 1, e.g., in a server or as part of a cloud service. In other words, the computer system 800 and/or the processing circuitry 802 therein may be able to remotely control at least part of the vehicle 2. In other words, the vehicle 2 may comprise and/or may be controlled by the computer system 800.

The computer system 800 and/or the processing circuitry 802 therein may be or may be able to control or communicate with any suitable entity of the vehicle 2, e.g., the one or more sensors, the first wheel 6, the second wheel 8, the differentials 10, the CAN, or any other suitable device of the vehicle 1.

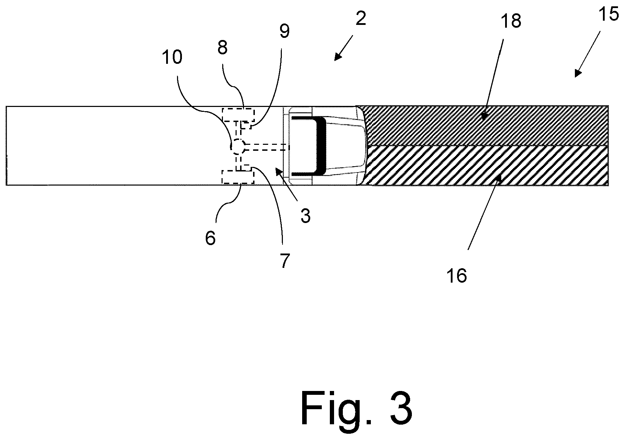

**FIG. 2** is the driveline 3 of the vehicle 2 according to the example of Fig. 1, when operating in split friction conditions. **FIG. 3** is further view of the vehicle 2 according to the example of Fig. 1, when operating in split friction conditions.

In the shown example, the second axle 12 comprises a split axle, the split axle comprising a first axle portion 11 configured to transfer torque between the differential 10 and the first wheel 6, and a second axle portion 13 configured to transfer torque between the differential 10 and the second wheel 8.

The vehicle 2 further comprises a first wheel brake 7 configured to apply a first wheel brake torque T_{b1} to the first wheel 6, and a second wheel brake 9 configured to apply a second wheel brake torque to the second wheel 8. In at least some examples the first wheel brake 7 may brake the first wheel 6 and the second wheel brake 9 may brake the second wheel 8, by applying a torque to any part of the driveline 3 between the differential 10 and the respective wheel 6, 8, the torque retarding rotational movement of the wheel 6, 8. In at least some examples the first wheel brake 7 and the second wheel brake 9 may comprise antilock brakes. In at least some examples the first wheel brake 7 and the second wheel brake 9 may comprise electrohydraulic brakes.

In the example illustrated in FIG. 2 and FIG. 3, the vehicle 2 is operating on a surface 15, wherein the surface 15 comprises a first surface portion 16, and a second surface portion 18. In the shown example the first wheel 6 is travelling over the first surface portion 16, and the second wheel 8 is travelling on the second surface portion 18. In the shown example the first surface portion 16 has a lower friction coefficient than the second surface portion 18. Difference in the friction coefficient of the first surface portion 16 and the second surface portion 18, may, for example, be due to different surface types or conditions. For example, surface types or conditions may comprise asphalt, concrete, or presence of water, ice, snow, mud, sand, gravel, loose materials, oil, etc. As another non-limiting example, the first wheel 6 and the second wheel 8 may have different characteristics. For example, a first tire (not shown) of the first wheel 6 may be different to a second tire (not shown) of the second wheel 8. Any one of the above differences may result in that the first wheel 6 may be more prone to slip than the second wheel 8. Thus, it would be desired to control a vehicle 2 in a manner that could accommodate differences in slip between the first and second wheels 6, 8.

**FIG. 4** is a flow chart of an exemplary method according to an example. The method comprises a computer-implemented method for controlling propulsion of the vehicle 2, for example on the surface 15.

The method comprises the following actions, which actions may be performed in any suitable order.

**S1**: By processing circuitry 802 of the computer system 800, issuing information to the vehicle 2 to initiate a torque feeding procedure.

**S2:** By processing circuitry 802 of the computer system 800, in response to receiving information indicative of that the first wheel 6 is slipping more than the second wheel 8; issuing information, by the processing circuitry 802, to the vehicle 2 to initiate a torque braking procedure.

**S3:** By processing circuitry 802 of the computer system 800, during the torque braking procedure, in response to determining that each criterion in a set of criteria, comprising at least one criterion, is met; issuing control information to the differential 10 to assume its locked state and to the vehicle 2 to terminate the torque braking procedure.

Issuing information to the vehicle 2 to initiate a torque feeding procedure is preferably initiated from standstill. In at least some examples the processing circuitry 802 may determine that the vehicle 2 is at standstill based on information received from a speedometer, GPS, or the like, the information indicative of the vehicle 2 being stationary. In at least some examples, the processing circuitry 802 may determine that the vehicle 2 is at standstill upon receiving information indicative of a parking brake being engaged, or the power unit 5 not outputting torque, or supplying torque to the differential 10. In at least some examples the torque feeding procedure is initiated when it is determined that an initial input torque is equal to zero. Input torque from the power unit 5 may be determined by the processing circuitry 802 upon receiving information indicative of a torque request, or lack thereof, or torque values of a component of the driveline 3.

Alternatively, the torque feeding procedure may correspond to any torque feeding procedure. In at least some examples the torque feeding procedure may be initiated when the vehicle 2 is moving. Furthermore, the torque feeding procedure may be initiated when an initial input torque is greater than zero.

During the torque feeding procedure, the differential 10 assumes the unlocked state and the power unit 5 feeds input torque to the differential 10 in accordance with a torque profile. In at least some examples, the torque profile of the torque feeding procedure may be determined by the processing circuitry 802 based on a user input, for example the depression of an accelerator pedal. The depression of the accelerator pedal may correspond to a speed, torque, or acceleration request. In at least some examples the vehicle 2 may be at least partially automated, and the torque profile of the torque feeding procedure may be defined by the processing circuitry 802 based on information received indicative of an input of a route, or a detected upcoming event, or the like. In at least some examples a requested input torque may be defined, for example by a position of the accelerator pedal, or based on a desired torque for a route/event. Thus, the torque profile may define a strategy for transitioning from an initial input torque to a requested input torque.

In at least some examples the torque feeding procedure may correspond to an acceleration event, or a hill-climbing event. In at least some examples the processing circuitry 802 may determine that the vehicle 2 has initiated the acceleration event when the torque profile of the torque feeding procedure is indicative of acceleration of the vehicle 2. In at least some examples the processing circuitry 802 may determine the torque feeding procedure is indicative of acceleration of the vehicle 2 using information received from a speedometer, GPS, or the like. In at least some examples the processing circuitry 802 may determine the torque feeding procedure is indicative of acceleration of the vehicle 2 based on a speed, torque, acceleration, etc. request. In at least some examples the processing circuitry 802 may determine the torque feeding procedure is indicative of acceleration of the vehicle 2 further based on a detected upcoming surface, increase in speed limit, acceleration of a vehicle in front, or need to overtake a vehicle in front, or the like. The processing circuitry 802 may determine the hill-climbing event when it is detected that an upcoming surface comprises an ascending gradient. In at least some examples the processing circuitry 802 may receive information indicative of the gradient of the upcoming surface from a camera, lidar, GPS, wirelessly from an external source, such as a server, another vehicle etc., or the computer system 800 may comprise map data, historical data, etc., stored therein.

Information indicative that the first wheel 6 is slipping more than the second wheel 8 may be received by the processing circuitry 802 from at least one sensor of the vehicle 2. In at least some examples the sensor may comprise a sensor configured to measure a value indicative of a motion of the first wheel 6, wherein the value may be indicative of, for example, a speed or acceleration of the first wheel 6. The sensor may comprise an accelerometer, encoder, tachometer, or the like. In at least some examples the value indicative of the motion of the first wheel 6 is compared to a value indicative of a motion of the second wheel 8, or a value indicative of a motion of another wheel, such as a driven wheel, wherein the value indicative of the motion of the second wheel 8/driven wheel may be similarly determined. Alternatively, in at least some examples, the value indicative of the motion of the first wheel 6 is compared with an expected value. The expected value may be determined by the processing circuitry 802 based on a speed of the vehicle 2, received from a speedometer, GPS, or the like. Alternatively, the expected value may be defined for a non-slip event and may for example be predetermined and stored in a table, or the like, of the computer system 800. Furthermore, the expected value may be determined by the processing circuitry 802 using information relating to the vehicle 2, and the environment. Information relating to the vehicle 2 may comprise, for example, information indicative of at least one of a gearing, weight of the vehicle 2, aerodynamics of the vehicle 2, tire properties, etc. Information relating to the environment may comprise inclination of the surface 15, wind, temperature, altitude, etc.

In at least some examples the torque braking procedure may be initiated when the processing circuitry 802 receives information indicative that the first wheel 6 is slipping more than the second wheel 8, wherein the difference between the slip of the first wheel 6 and the second wheel 8 fulfills a criterion. In at least some examples the criterion being that the difference between the slip of the first wheel 6 and the second wheel 8 is greater than or equal to a threshold. In at least some examples the threshold may be predetermined. In at least some examples, the threshold may be determined based on a steering angle of the vehicle 2. For example, the threshold amount may vary when the vehicle 2 is turning, such that a difference in wheel speed which may be desired due to the turning of the vehicle 2 is allowed.

In at least some examples the information indicative that the first wheel 6 is slipping more than the second wheel 8 may comprise information indicative of the first rotational speed and the second rotational speed. Furthermore, the criterion may comprise that the first rotational speed is greater than the second rotation speed and the difference between the first rotational speed and the second rotational speed is above a difference threshold. Purely by way of example, the information indicative of that the first wheel 6 is slipping more than the second wheel may may be based on an observation that the first rotational speed of the first wheel is above the second rotational speed of the second wheel, for instance that a ratio between the first rotational speed and the second rotational speed is above a certain threshold ratio that may be at least 1.01, preferably at least 1.05, more preferred at least 1.10. It is envisaged that the computer system 800 itself may be adapted to determine and thus issue the information indicative that the first wheel 6 is slipping more than the second wheel 8 on the basis of e.g. the observation that the first rotational speed of the first wheel 6 is above the second rotational speed of the second wheel 8. However, it is also envisaged that an entity separate from the computer system 800 may determine the information indicative that the first wheel 6 is slipping more than the second wheel 8 and issue such information to the computer system 800. By way of example only, the information indicative that the first wheel 6 is slipping more than the second wheel 8 may be in the form of "yes", "1" or the like.

During the torque braking procedure, a first wheel brake torque T_{b1} counteracting the first torque portion Tₚ₁ is applied to the first wheel 6 as the power unit 5 feeds input torque to the differential 10 in accordance with the torque profile. The first wheel brake torque T_{b1} may be applied by the first wheel brake 7.

During the torque braking procedure, the first wheel brake torque T_{b1} may be controlled with the aim of keeping the difference between the first rotational speed and the second rotational speed within a predetermined speed difference range. In at least some examples, the predetermined speed difference range may be determined based on a steering angle of the vehicle 2. For example, the predetermined speed difference range amount may vary when the vehicle 2 is turning, such that a difference in wheel speed which may be desired due to the turning of the vehicle 2 is allowed.

In at least some examples, the torque braking procedure may further comprise a traction control intervention of the second wheel 8 when it is determined that the second wheel 8 is slipping. Determining that the second wheel 8 is slipping may be performed similarly to that of the first wheel 6. In at least some examples the traction control intervention of the second wheel 8 may comprise control of a second wheel brake torque counteracting the second torque portion Tₚ₂ being applied to the second wheel 8. The second wheel brake torque may be applied by the second wheel brake 9. In at least some examples the traction control intervention of the second wheel 8 may comprise a reduction of the input torque.

The first wheel brake torque T_{b1} may be controlled based on at least one of: an initial input torque at which the first wheel 6 is slipping more than the second wheel 8, the torque profile of the torque feeding procedure, the first rotational speed and/or the second rotational speed, an estimate of an upcoming road surface. In at least some examples the first wheel brake torque T_{b1} may be controlled by closed loop control. Alternatively, in at least some examples, the first wheel brake torque T_{b1} may be controlled by open-loop control.

In at least some examples the initial input torque at which the first wheel 6 is slipping more than the second wheel 8 may be used to set a maximum allowable driving torque at the first wheel. The maximum allowable driving torque sets a limit for a first wheel driving torque T_{d1}, the first wheel driving torque T_{d1} comprising the torque at the wheel resulting from the first torque portion Tₚ₁ and the first wheel brake torque T_{b1}. Thus, the first wheel brake torque T_{b1} may be applied such that the first wheel driving torque T_{d1} does not exceed the maximum allowable driving torque. In at least some examples, the first wheel brake, the second wheel brake, and/or the input torque may be adjusted, such that the first wheel driving torque T_{d1} exceeds the maximum allowable driving torque, if the first wheel driving torque T_{d1}exceeding the maximum allowable driving torque does not cause the first wheel 6 to slip more than the second wheel 8 control of the first wheel brake torque T_{b1} based on the maximum allowable driving torque may be stopped. In at least some examples a subsequent value of the first wheel driving torque T_{d1} at which the first wheel 6 is slipping more than the second wheel 8 may be used to set a subsequent maximum allowable torque.

In at least some examples the torque profile of the torque feeding procedure may be used such that the first wheel brake torque T_{b1}is applied in proportion to the input torque of the torque profile.

In at least some examples the first rotational speed and/or the second rotational speed may be used such that control of the first wheel brake torque T_{b1}comprises a closed loop control. In at least some examples the first rotational speed is controlled towards the second rotational speed, or the speed of another wheel of the vehicle, such as a driven wheel. Alternatively, the first rotational speed may be controlled towards an expected first rotational speed.

In at least some examples an estimate of an upcoming road surface is used such that the first wheel brake torque T_{b1} is applied based on a predicted upcoming road surface. The upcoming road surface may be estimated based upon information received by the processing circuitry 802. Information received by the processing circuitry may be indicative of weather, temperature, surface type, presence of puddles, spillages, etc. In at least some examples information received by the processing circuitry indicative of the upcoming road surface may be received from a camera, lidar, temperature sensor, wirelessly from an external source, such as a server, another vehicle etc., or the computer system 800 may comprise map data, historical data, etc. stored therein.

The set of criteria comprises a brake time criterion being that the first rotational speed is equal to or above the second rotational speed when the first wheel brake torque T_{b1} has been applied to the first wheel 6 for a predetermined time period. The predetermined time period may be determined based on experimental data. The predetermined time period may be based on vehicle load, tire wear, brake wear, etc. The predetermined time period of the brake time criterion may be in the range of 5-15 seconds.

In at least some examples the set of criteria may further comprise a brake reduction response criterion being that a reduction in the first wheel brake torque T_{b1} during a portion of the predetermined time period, as compared to a first wheel brake torque T_{b1} being applied previously during the torque braking procedure, results in an increase of the first rotational speed. In at least some examples the brake reduction response criterion may be that a reduction in the first wheel brake torque T_{b1} relative to the input torque, i.e. an increase of the first wheel driving torque, during a portion of the predetermined time period, as compared to a first wheel brake torque T_{b1} being applied previously during the torque braking procedure, results in an increase of the first rotational speed. A reduction in the first wheel brake torque T_{b1} relative to the input torque may be achieved by controlling the first wheel brake 7, second wheel brake 9, and/or the input torque.

In at least some examples, for example where the torque braking procedure comprises open-loop control, the reduction in the first wheel brake torque T_{b1} comprises that the first wheel brake torque T_{b1} is reduced a predetermined torque amount, as compared to a first wheel brake torque T_{b1} being applied previously during the torque braking procedure, wherein preferably the reduction in the first wheel brake torque T_{b1} is performed periodically during the predetermined time period.. In at least some examples the first wheel brake torque T_{b1} being a predetermined torque amount, as compared to a first wheel brake torque T_{b1} being applied previously during the torque braking procedure, may comprise reducing the first wheel brake torque relative to the input torque, i.e. increasing the first wheel driving torque, during the predetermined time period. Reducing the first wheel brake torque T_{b1} relative to the input torque may be achieved by controlling the first wheel brake 7, second wheel brake 9, and/or the input torque. The first wheel brake torque T_{b1} is reduced a predetermined torque amount, as compared to a first wheel brake torque T_{b1} being applied previously during the torque braking procedure, periodically during the predetermined time period.

The set of criteria may further comprise a same rotational speed criterion being that a difference between the first rotational speed and the second rotational speed is within a predetermined speed difference range. In at least some examples the same rotational speed criterion may be that the first rotational speed and the second rotational speed are the same.

The set of criteria may further comprise a braking torque criterion being that the first wheel brake torque T_{b1} is greater than a threshold first wheel brake torque. In at least some examples the threshold first wheel brake torque may comprise a predetermined first wheel brake torque. In at least some examples the threshold first wheel brake torque may be based on vehicle load, tire wear, brake wear, etc.

**FIG. 5** is a schematic diagram of a computer system 800 for implementing examples disclosed herein.

The computer system 800 comprises processing circuitry 802 configured to control the vehicle 2. The processing circuitry 802 being configured to: issue information to the vehicle 2 to initiate a torque feeding procedure, preferably from standstill, in which the differential 10 assumes the unlocked state and the power unit 5 feeds input torque to the differential 10 in accordance with a torque profile; during the torque feeding procedure, in response to receiving information indicative of that the first wheel 6 is slipping more than the second wheel 8; issue information to the vehicle 2 to initiate a torque braking procedure wherein a first wheel brake torque T_{b1} counteracting the first torque portion Tₚ₁ is applied to the first wheel 6 as the power unit 5 feeds input torque to the differential 10 in accordance with the torque profile; during the torque braking procedure, in response to determining that each criterion in a set of criteria, comprising at least one criterion, is met; issue control information to the differential 10 to assume its locked state and to the vehicle 2 to terminate the torque braking procedure, wherein the set of criteria comprises: a brake time criterion being that a first rotational speed of the first wheel 6 is equal to or above a second rotational speed of the second wheel 8 when the first wheel brake torque T_{b1} has been applied to the first wheel 6 for a predetermined time period.

The computer system 800 is adapted to execute instructions from a computer-readable medium to perform these and/or any of the functions or processing described herein. The computer system 800 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, the control system may include a single control unit, or a plurality of control units connected or otherwise communicatively coupled with each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include processing circuitry 802 (e.g., processing circuitry including one or more processor devices or control units), a memory 804, and a system bus 806. The computer system 800 may include at least one computing device having the processing circuitry 802. The system bus 806 provides an interface for system components including, but not limited to, the memory 804 and the processing circuitry 802. The processing circuitry 802 may include any number of hardware components for conducting data or signal processing or for executing computer code stored in memory 804. The processing circuitry 802 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 802 may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processing circuitry 802 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with processing circuitry 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

Computer-code which is hard or soft coded, may be provided in the form of one or more modules. The module(s) can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program 820 stored on a transitory or non-transitory computer-usable or computer-readable storage medium (e.g., single medium or multiple media), such as the storage device 814, which includes complex programming instructions (e.g., complex computer-readable program code) to cause the processing circuitry 802 to carry out actions described herein. Thus, the computer-readable program code of the computer program 820 can comprise software instructions for implementing the functionality of the examples described herein when executed by the processing circuitry 802. In some examples, the storage device 814 may be a computer program product (e.g., readable storage medium) storing the computer program 820 thereon, where at least a portion of a computer program 820 may be loadable (e.g., into a processor) for implementing the functionality of the examples described herein when executed by the processing circuitry 802. The processing circuitry 802 may serve as a controller or control system for the computer system 800 that is to implement the functionality described herein.

The computer system 800 may include an input device interface 822 configured to receive input and selections to be communicated to the computer system 800 when executing instructions, such as from a keyboard, mouse, touch-sensitive surface, etc. Such input devices may be connected to the processing circuitry 802 through the input device interface 822 coupled to the system bus 806 but can be connected through other interfaces, such as a parallel port, an Institute of Electrical and Electronic Engineers (IEEE) 1394 serial port, a Universal Serial Bus (USB) port, an IR interface, and the like. The computer system 800 may include an output device interface 824 configured to forward output, such as to a display, a video display unit (e.g., a liquid crystal display (LCD) or a cathode ray tube (CRT)). The computer system 800 may include a communications interface 826 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples, where each respective example may be combined with any of the above examples or subject matter of the attached claims.

**Example 1:** A computer system 800 comprising processing circuitry 802 configured to control a vehicle 2, the vehicle 2 comprising: a first wheel 6 and a second wheel 8, a differential 10, each one of the first wheel 6 and the second wheel 8 being connected to the differential 10, a power unit 5 configured to supply input torque to the differential 10, the differential 10 being configured to distribute the input torque via at least one of a first torque portion Tₚ₁ to the first wheel 6 and a second torque portion Tₚ₂ to the second wheel 8; the differential 10 being configured to assume each one of an unlocked state and a locked state; the processing circuitry 802 being configured to: issue information to the vehicle 2 to initiate a torque feeding procedure, preferably from standstill, in which the differential 10 assumes the unlocked state and the power unit 5 feeds input torque to the differential 10 in accordance with a torque profile; during the torque feeding procedure, in response to receiving information indicative of that the first wheel 6 is slipping more than the second wheel 8; issue information to the vehicle 2 to initiate a torque braking procedure wherein a first wheel brake torque T_{b1} counteracting the first torque portion Tₚ₁ is applied to the first wheel 6 as the power unit 5 feeds input torque to the differential 10 in accordance with the torque profile; during the torque braking procedure, in response to determining that each criterion in a set of criteria, comprising at least one criterion, is met; issue control information to the differential 10 to assume its locked state and to the vehicle 2 to terminate the torque braking procedure, wherein the set of criteria comprises: a brake time criterion being that a first rotational speed of the first wheel 6 is equal to or above a second rotational speed of the second wheel 8 when the first wheel brake torque T_{b1} has been applied to the first wheel 6 for a predetermined time period.

**Example 2:** The computer system 800 of example 1, wherein the set of criteria comprises: a brake reduction response criterion being that a reduction in the first wheel brake torque T_{b1} during a portion of the predetermined time period, as compared to a first wheel brake torque T_{b1} being applied previously during the torque braking procedure, results in an increase of the first rotational speed.

**Example 3:** The computer system 800 of example 2, wherein the reduction in the first wheel brake torque T_{b1} comprises that the first wheel brake torque T_{b1} is reduced a predetermined torque amount, as compared to a first wheel brake torque T_{b1} being applied previously during the torque braking procedure, wherein preferably the reduction in the first wheel brake torque T_{b1} is performed periodically during the predetermined time period. **Example 4:** The computer system 800 of example 3, wherein the first wheel brake torque T_{b1} is reduced a predetermined torque amount, as compared to a first wheel brake torque T_{b1} being applied previously during the torque braking procedure, periodically during the predetermined time period.

**Example 5:** The computer system 800 of any of the preceding examples, wherein the set of criteria comprises: a same rotational speed criterion being that a difference between the first rotational speed and the second rotational speed is within a predetermined speed difference range.

**Example 6:** The computer system 800 of any of the preceding examples, wherein during the torque braking procedure the first wheel brake torque T_{b1} is controlled with the aim of keeping the difference between the first rotational speed and the second rotational speed within a predetermined speed difference range.

**Example 7:** The computer system 800 of example 6, wherein the first wheel brake torque T_{b1} is controlled based on at least one of: an initial input torque at which the first wheel 6 is slipping more than the second wheel 8, the torque profile of the torque feeding procedure, the first rotational speed and/or the second rotational speed, an estimate of an upcoming road surface.

**Example 8:** The computer system 800 of any of the preceding examples, wherein the predetermined time period of the brake time criterion is in the range of 5-15 seconds.

**Example 9:** The computer system 800 of any of the preceding examples, wherein the set of criteria comprises: a braking torque criterion being that the first wheel brake torque T_{b1} is greater than a threshold first wheel brake torque.

**Example 10:** A vehicle 2 comprising, or controlled by, the computer system 800 of any of examples 1-9.

**Example 11:** A computer-implemented method for controlling propulsion of a vehicle 2, the vehicle 2 comprising: a first wheel 6 and a second wheel 8, a differential 10, each one of the first wheel 6 and the second wheel 8 being connected to the differential 10, a power unit 5 configured to supply input torque to the differential 10, the differential 10 being configured to distribute the input torque via at least one of a first torque portion Tₚ₁ to the first wheel 6 and a second torque portion Tₚ₂ to the second wheel 8; the differential 10 being configured to assume each one of an unlocked state and a locked state; the method comprising: by processing circuitry 802 of a computer system 800, issuing S1 information to the vehicle to initiate a torque feeding procedure, preferably from standstill, in which the differential 10 assumes the unlocked state and the power unit 5 feeds input torque to the differential 10 in accordance with a torque profile; by the processing circuitry 802, during the torque feeding procedure, in response to receiving information indicative of that the first wheel 6 is slipping more than the second wheel 8; issuing S2 information to the vehicle 2 to initiate a torque braking procedure wherein a first wheel brake torque T_{b1} counteracting the first torque portion Tₚ₁ is applied to the first wheel 6 as the power unit 5 feeds input torque to the differential 10 in accordance with the torque profile; by the processing circuitry 802, during the torque braking procedure, in response to determining that each criterion in a set of criteria, comprising at least one criterion, is met; issuing S3 control information to the differential 10 to assume its locked state and to the vehicle 2 to terminate the torque braking procedure, wherein the set of criteria comprises: a brake time criterion being that the first rotational speed is equal to or above the second rotational speed when the first wheel brake torque T_{b1} has been applied to the first wheel 6 for a predetermined time period.

**Example 12:** The computer-implemented method of example 11, wherein the set of criteria comprises: a brake reduction response criterion being that a reduction in the first wheel brake torque T_{b1} during a portion of the predetermined time period, as compared to a first wheel brake torque T_{b1} being applied previously during the torque braking procedure, results in an increase of the first rotational speed.

**Example 13:** The computer-implemented of example 12, wherein the torque braking procedure comprises that the first wheel brake torque T_{b1} is reduced a predetermined torque amount, as compared to a first wheel brake torque T_{b1} being applied previously during the torque braking procedure, wherein preferably the reduction in the first wheel brake torque T_{b1} is performed periodically during the predetermined time period.

**Example 14:** The computer system 800 of example 13, wherein the brake reduction test is performed periodically during the predetermined time period.

**Example 15:** The computer system 800 of any of examples 11-14, wherein the set of criteria comprises: a same rotational speed criterion being that a difference between the first rotational speed and the second rotational speed is within a predetermined speed difference range.

**Example 16:** The computer system 800 of any of examples 11-15, wherein during the torque braking procedure the first wheel brake torque T_{b1} is controlled with the aim of keeping the difference between the first rotational speed and the second rotational speed within a predetermined speed difference range.

**Example 17:** The computer system 800 of example 16, wherein the first wheel brake torque T_{b1} is controlled based on at least one of: an initial input torque at which the first wheel 6 is slipping more than the second wheel 8, the torque profile of the torque feeding procedure, the first rotational speed and/or the second rotational speed, an estimate of an upcoming road surface.

**Example 18:** The computer system 800 of any of examples 11-17, wherein the predetermined time period of the brake time criterion is in the range of 5-15 seconds.

**Example 19:** The computer system 800 of any of examples 11-18, wherein the set of criteria comprises: a braking torque criterion being that the first wheel brake torque T_{b1} is greater than a threshold first wheel brake torque.

**Example 20:** A computer program 820 product comprising program code for performing, when executed by the processing circuitry 802, the method of any of examples 11-19.

**Example 21:** A non-transitory computer-readable storage medium 814 comprising instructions, which when executed by the processing circuitry 802, cause the processing circuitry 802 to perform the method of any of examples 11-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.
It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (800) comprising processing circuitry (802) configured to control a vehicle (2), the vehicle (2) comprising:
- a first wheel (6) and a second wheel (8),
- a differential (10), each one of the first wheel (6) and the second wheel (8) being connected to the differential (10),
- a power unit (5) configured to supply input torque to the differential (10),
the differential (10) being configured to distribute the input torque via at least one of a first torque portion (Tₚ₁) to the first wheel (6) and a second torque portion (Tₚ₂) to the second wheel (8);
the differential (10) being configured to assume each one of an unlocked state and
a locked state;
the processing circuitry (802) being configured to:
- issue information to the vehicle (2) to initiate a torque feeding procedure, preferably from standstill, in which the differential (10) assumes the unlocked state and the power unit (5) feeds input torque to the differential (10) in accordance with a torque profile;
- during the torque feeding procedure, in response to receiving information indicative of that the first wheel (6) is slipping more than the second wheel (8); issue information to the vehicle (2) to initiate a torque braking procedure wherein a first wheel brake torque (T_{b1}) counteracting the first torque portion (Tₚ₁) is applied to the first wheel (6) as the power unit (5) feeds input torque to the differential (10) in accordance with the torque profile;
- during the torque braking procedure, in response to determining that each criterion in a set of criteria, comprising at least one criterion, is met; issue control information to the differential (10) to assume its locked state and to the vehicle (2) to terminate the torque braking procedure,
wherein the set of criteria comprises:
- a brake time criterion being that a first rotational speed of the first wheel (6) is equal to or above a second rotational speed of the second wheel (8) when the first wheel brake torque (T_{b1}) has been applied to the first wheel (6) for a predetermined time period.

2. The computer system (800) of claim 1, wherein the set of criteria comprises:
- a brake reduction response criterion being that a reduction in the first wheel brake torque (T_{b1}) during a portion of the predetermined time period, as compared to a first wheel brake torque (T_{b1}) being applied previously during the torque braking procedure, results in an increase of the first rotational speed.

3. The computer system (800) of claim 2, wherein the reduction in the first wheel brake torque (T_{b1}) comprises that the first wheel brake torque (T_{b1}) is reduced a predetermined torque amount, as compared to a first wheel brake torque (T_{b1}) being applied previously during the torque braking procedure, wherein preferably the reduction in the first wheel brake torque (T_{b1}) is performed periodically during the predetermined time period.

4. The computer system (800) of any of the preceding claims, wherein the set of criteria comprises:
- a same rotational speed criterion being that a difference between the first rotational speed and the second rotational speed is within a predetermined speed difference range.

5. The computer system (800) of any of the preceding claims, wherein during the torque braking procedure the first wheel brake torque (T_{b1}) is controlled with the aim of keeping the difference between the first rotational speed and the second rotational speed is within a predetermined speed difference range, wherein preferably the first wheel brake torque (T_{b1}) is controlled based on at least one of:
- an initial input torque at which the first wheel (6) is slipping more than the second wheel (8),
- the torque profile of the torque feeding procedure,
- the first rotational speed and/or the second rotational speed,
- an estimate of an upcoming road surface.

6. The computer system (800) of any of the preceding claims, wherein the set of criteria comprises:
- a braking torque criterion being that the first wheel brake torque (T_{b1}) is greater than a threshold first wheel brake torque.

7. A vehicle (2) comprising, or controlled by, the computer system (800) of any of claims 1-6.

8. A computer-implemented method for controlling propulsion of a vehicle (2), the vehicle (2) comprising:
- a first wheel (6) and a second wheel (8),
- a differential (10), each one of the first wheel (6) and the second wheel (8) being connected to the differential (10),
- a power unit (5) configured to supply input torque to the differential (10),
the differential (10) being configured to distribute the input torque via at least one of a first torque portion (Tₚ₁) to the first wheel (6) and a second torque portion (Tₚ₂) to the second wheel (8); the differential (10) being configured to assume each one of an unlocked state and a locked state;
the method comprising:
- by processing circuitry (802) of a computer system (800), issuing (S1) information to the vehicle to initiate a torque feeding procedure, preferably from standstill, in which the differential (10) assumes the unlocked state and the power unit (5) feeds input torque to the differential (10) in accordance with a torque profile;
- by the processing circuitry (802), during the torque feeding procedure, in response to receiving information indicative of that the first wheel (6) is slipping more than the second wheel (8); issuing (S2) information to the vehicle (2) to initiate a torque braking procedure wherein a first wheel brake torque (T_{b1}) counteracting the first torque portion (Tₚ₁) is applied to the first wheel (6) as the power unit (5) feeds input torque to the differential (10) in accordance with the torque profile;
- by the processing circuitry (802), during the torque braking procedure, in response to determining that each criterion in a set of criteria, comprising at least one criterion, is met; issuing (S3) control information to the differential (10) to assume its locked state and to the vehicle (2) to terminate the torque braking procedure,
wherein the set of criteria comprises:
- a brake time criterion being that the first rotational speed is equal to or above the second rotational speed when the first wheel brake torque (T_{b1}) has been applied to the first wheel (6) for a predetermined time period.

9. The computer-implemented method of claim 8, wherein the set of criteria comprises:
- a brake reduction response criterion being that a reduction in the first wheel brake torque (T_{b1}) during a portion of the predetermined time period, as compared to a first wheel brake torque (T_{b1}) being applied previously during the torque braking procedure, results in an increase of the first rotational speed.

10. The computer-implemented of any of claims 8-9, wherein the reduction in the first wheel brake torque (T_{b1}) comprises that the first wheel brake torque (T_{b1}) is reduced a predetermined torque amount, as compared to a first wheel brake torque (T_{b1}) being applied previously during the torque braking procedure, wherein preferably the reduction in the first wheel brake torque (T_{b1}) is performed periodically during the predetermined time period.

11. The computer system (800) of any of claims 8-10, wherein the set of criteria comprises:
- a same rotational speed criterion being that a difference between the first rotational speed and the second rotational speed is within a predetermined speed difference range.

12. The computer system (800) of any of claims 8-11, wherein during the torque braking procedure the first wheel brake torque (T_{b1}) is controlled with the aim of keeping the difference between the first rotational speed and the second rotational speed within a predetermined speed difference range, wherein preferably the first wheel brake torque (T_{b1}) is controlled based on at least one of:
- an initial input torque at which the first wheel (6) is slipping more than the second wheel (8),
- the torque profile of the torque feeding procedure,
- the first rotational speed and/or the second rotational speed,
- an estimate of an upcoming road surface.

13. The computer system (800) of any of claims 8-12, wherein the set of criteria comprises:
- a braking torque criterion being that the first wheel brake torque (T_{b1}) is greater than a threshold first wheel brake torque.

14. A computer program (820) product comprising program code for performing, when executed by the processing circuitry (802), the method of any of claims 8-13.

15. A non-transitory computer-readable storage medium (814) comprising instructions, which when executed by the processing circuitry (802), cause the processing circuitry (802) to perform the method of any of claims 8-13.
